# EUROPÄISCHE PATENTSCHRIFT

(11) **EP 1 126 918 B1**
(45) Veröffentlichungstag und Bekanntmachung des Hinweises auf die Patenterteilung: **23.07.2003**
(21) Anmeldenummer: 99952204.8
(22) Anmeldetag: 03.11.1999
(51) Int. Cl.: B01L 11/00, G01N 1/00, B01J 19/28

(54) **Vakuumzentrifuge bzw. Reaktionskammer**
Vacuum centrifuge or reaction chamber
Centrifugeuse à vide ou chambre de réaction

(30) Priorität: 03.11.1998 CH 221498
(43) Veröffentlichungstag der Anmeldung: 29.08.2001
(73) Patentinhaber: Hettlab AG, 8806 Bäch (CH)
(72) Erfinder: DÖBELIN, Werner, CH-4153 Reinach (CH)
(74) Vertreter: Braun, André
(86) Internationale Anmeldenummer: CH9900516
(87) Internationale Veröffentlichungsnummer: WO00025925

(56) Entgegenhaltungen:
- EP-A- 0 210 014
- WO-A-90/02605
- WO-A-98/20965

## Beschreibung

Die Erfindung betrifft eine Vakuumzentrifuge mit einem Rotor oder eine Reaktionskammer mit einer integrierten Schüttelplatte, wobei in der Vakuumzentrifuge bzw. der Reaktionskammer eine Anzahl von Proben- bzw. Reaktionsgefässen zur gleichzeitigen Bearbeitung der in ihnen befindlichen Proben bewegbar sind, mit einem Zuführungssystem für gasförmige oder flüssige Medien in das Innere der Proben- bzw. Reaktionsgefässe.

Beim Bearbeiten von Proben in Vakuumzentrifugen und Reaktionskammern treten Probleme auf, welche bisher noch nicht zufriedenstellend gelöst sind.

Die Proben befinden sich meist in Reagenzgläsern oder Racks mit entsprechenden Vertiefungen. Da diese Probengefässe sehr eng sind, d.h. das Verhältnis von Gefässtiefe zu Gefässdurchmesser sehr gross ist, ergibt sich folgende Problematik: die durch die Verdampfung bedingte Abkühlung der Probe ergibt einen Kältezapfen im Probengefäss und verhindert damit weitgehend, dass Dampfphase aus den Probengefässen abgesaugt werden kann.

Aus PCT/CH 97/00431 und von Vakuumzentrifugen ist eine Einrichtung bekannt, bei der die Probengefässe in vorgewärmte oder geheizte Racks positioniert werden. Da die Abkühlung durch die Verdampfungsenergie nur sehr schlecht durch Heizen oder IR-Strahlung kompensiert werden kann, und die Probengefässe meist aus gut isoliertem Material, wie Glas oder Kunststoff, bestehen, müssen für gewisse Anwendungen äusserst langwierige Prozesse in Kauf genommen werden.

In der EP-A-0 210 014 ist ein Probenbehandlungssystem beschrieben, das mit einer Waschvorrichtung für die Probengefässe ausgestattet ist. Die Waschvorrichtung besitzt Kanülen, die in einem Waschblock angeordnet und einzelnen Probengefässen zugeordnet sind. Der Waschblock ist Teil eines multifunktionalen sog. integrierten Uebertragungskopfes. Der Waschblock kann zur Einführung der Kanülen in die Probengefässe vertikal bewegt werden. Dieses System wäre aber für den Einsatz zusammen mit während der Bearbeitung lateral bewegten Probengefässen nicht geeignet, weil eine laterale Bewegung des Waschblocks nicht möglich ist.

In WO 90 02605 A ist ein Apparat zur Peptidsynthese beschrieben, der ein Flüssigkeitszuführungssystem, beispielsweise zum Waschen der Reaktionskammern, aufweist. Das Flüssigkeitszuführungssystem kann von den Reaktionskammern wegbewegt werden, wenn es gerade nicht gebraucht wird. Auch dieses Flüssigkeitszuführungssystem ist für den Einsatz mit lateral bewegten Probengefässen nicht geeignet, weil es keine laterale Bewegung ausführen kann.

Der Erfindung liegt die Aufgabe zugrunde, ein System anzugeben, mit dem die genannten Nachteile des Standes der Technik behoben werden.

Erfindungsgemäss wird dies gelöst durch eine Vakuumzentrifuge oder eine Reaktionskammer der anfangs genannten Art, die sich dadurch auszeichnen, dass das Zuführungssystem eine innerhalb der Zentrifuge bzw. Reaktionskammer über den Proben- bzw. Reaktionsgefässen angeordnete höhenverstellbare Adapterplatte umfasst, an welcher den einzelnen Proben- bzw. Reaktionsgefässen zugeordnete Kanülen angeordnet sind, wobei das Zuführungssystem ein Einleitsystem für gasförmige oder flüssige Medien umfasst, dass die Adapterplatte mit dem Rotor bzw. der Schüttelplatte in deren Bewegungsrichtung starr verbunden ist, derart dass die Kanülen während der Bewegung des Rotors bzw. der Schüttelplatre in die Probengefässe eingeführt sein können.

Durch dieses System kann warmes Gas oder Flüssigkeit in die bewegten Probengefässe geführt werden, um die Bildung eines Kältezapfens im Probengefäss während des Verdampfungsvorganges zu verhindern, sowie das gleichzeitige Zuführen von Reagenzien in die einzelnen Probengefässe zu ermöglichen.

Die Adapterplatte und das Probenrack bzw. im Fall der Zentrifuge der Rotor sind aneinander gekoppelt, damit beim Schütteln bzw. Zentrifugieren die Positionierung der Kanüle in dem entsprechenden Probengefäss unverändert bleibt. Vorzugsweise kann die Adapterplatte geheizt werden, damit das Medium vorgewärmt in die Probengefässe strömen kann. Bei Systemen, welche in Vakuumverdampfern eingesetzt werden, wird der vorzugsweise inerte Gasfluss so reduziert, dass wenigstens die Bildung eines Kältezapfens im Probengefäss verhindert wird. Je höher der eingestellte Gasfluss ist, desto leistungsfähiger muss das Vakuumsystem ausgelegt sein, um das gewünschte Vakuum in der Reaktionskammer aufrecht zu erhalten.

Das Betreiben dieser Einrichtung unter Druck bedingt eine entsprechende drucktaugliche Reaktionskammer, welche nach dem Stand der Technik wie unter PCT/CH 97/00431 beschrieben ausgeführt ist.

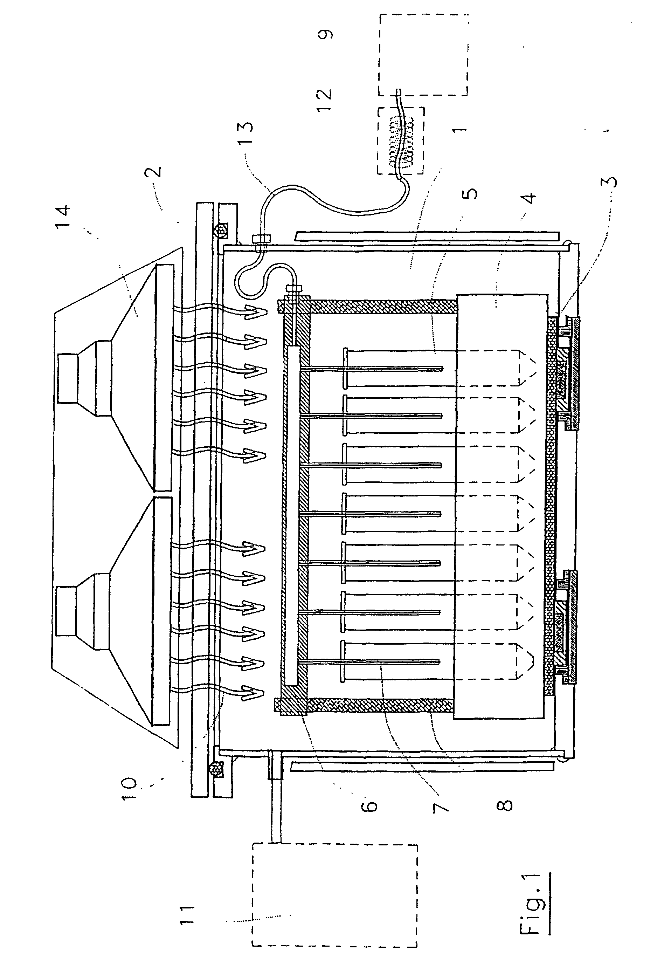

In folgender Beschreibung wird anhand der beiliegenden Zeichnung ein bevorzugtes Ausführungsbeispiel vorgestellt:

Wie in der Zeichnung gezeigt ist eine Reaktionskammer 1 von oben mit einer Glasplatte 2 verschlossen. In der Kammer befindet sich eine Schüttelplatte 3, auf der ein Probenrack 4 mit Probengefässen 5 positioniert ist. Eine Adapterplatte 6 mit Kanülen 7 ist über dem Probenrack 4 positioniert und an Führungszapfen 8 fixiert, die mit der Schüttelplatte fest verbunden sind. Die Adapterplatte 6 bewegt sich somit synchron mit der Schüttelplatte 3 und dem Probenrack 4. Über ein Gaseinleitsystem 9 und eine flexible Transferleitung 13 strömt Gas durch einen Wärmetauscher 12 in die Adapterplatte 6, welche mittels oberhalb der Glasplatte ausserhalb der Kammer angeordneten Infrarotlampen 10 beheizt werden kann. Das Gas strömt durch die Adapterplatte 6, erwärmt sich und strömt durch die Kanülen 7 in die Probengefässe 5. Über das Vakuumpumpensystem 11 wird das Gas respektive die Dämpfe aus der Reaktionskammer 1 abgesaugt.

Als Kanülen eignen sich Glas-, Metall- oder Kunststoffkapillaren bzw. im Fall von Zentrifugen mit ausschwingenden Probengefässen flexible Fused-Silica-, Teflon- oder Kunststoffkapillaren.

In Vakuumzentifugen, in denen die Adapterplatte und die Kapillaren zusammen mit den Probengefässen rotieren, ist das Gaseinleitsystem im Zentrum der Adapterplatte mittels an sich bekannter Dichtungssysteme angeschlossen.

Das Gaseinleitsystem, das Vakuumpumpensystem und die Reaktionskammer mit Wärmestrahlern sind im einschlägigen Stand der Technik an sich bekannt und brauchen deshalb hier nicht näher beschrieben werden.

Selbstverständlich kann die Begasung mit entsprechenden apparativen Anpassungen auch im Überdruckbereich erfolgen. Die Reaktionskammer und das Gaseinleitsystem sind gemäss dem entsprechenden Stand der Technik für den benötigten Druckbereich ausgelegt.

## Patentansprüche

1. Vakuumzentrifuge mit einem Rotor oder Reaktionskammer mit einer integrierten Schüttelplatte (3), wobei in der Vakuumzentrifuge bzw. der Reaktionskammer eine Anzahl von Proben- bzw. Reaktionsgefässen zur gleichzeitigen Bearbeitung der in ihnen befindlichen Proben bewegbar sind, mit einem Zuführungssystem für gasförmige oder flüssige Medien in das Innere der Proben- bzw. Reaktionsgefässe, **dadurch gekennzeichnet, dass** das Zuführungssystem eine innerhalb der Zentrifuge bzw. Reaktionskammer (1) über den Proben- bzw. Reaktionsgefässen (5) anbringbare höhenverstellbare Adapterplatte (6) umfasst, an welcher den einzelnen Proben- bzw. Reaktionsgefässen (5) zuordenbare Kanülen (7) angeordnet sind, wobei das Zuführungssystem ein Einleitsystem (9) für gasförmige oder flüssige Medien umfasst, dass die Adapterplatte (6) mit dem Rotor bzw. der Schüttelplatte (3) in deren Bewegungsrichtung starr verbunden ist, derart dass die Kanülen (7) während der Bewegung des Rotors bzw. der Schüttelplatte (3) in die Probengefässe (5) eingeführt sein können.

2. Zuführungssystem nach Anspruch 1, **dadurch gekennzeichnet, dass** an die Zentrifuge bzw. Reaktionskammer (1) eine Vakuumpumpe (11) angeschlossen ist, welche während der Zuführung von gasförmigem Medium in der Zentrifuge bzw. Reaktionskammer ein Vakuum aufrechterhält.

3. Zuführungssystem nach einem der Ansprüche 1 - 2, **dadurch gekennzeichnet, dass** das Einleitsystem (9) mit einer Heizeinrichtung (12) versehen ist.

4. Zuführungssystem nach einem der Ansprüche 1 - 2, **dadurch gekennzeichnet dass** das Einleitsystem (9) mit einem ausserhalb der Reaktionskammer (1) angeordneten Wärmetauscher (12) und einer flexiblen Transferleitung (13) versehen ist.

5. Verwendung eines Zuführungssystems nach einem der Ansprüche 1-4 in Verdampfern oder in Reaktionskammern für die chemische Synthese.

## Claims

1. Vacuum centrifuge with a rotor, or reaction chamber with an integrated shaking platform (3), whereby in the vacuum centrifuge or reaction chamber a number of sample or reaction vessels are moveable for the simultaneous processing of the samples contained therein, with a system for feeding gaseous or liquid media into the sample or reaction vessels, **characterized in that** the feed system comprises a height-adjustable adapter plate (6) that can be brought over the sample or reaction vessels (5) inside the centrifuge or reaction chamber (1), said adapter plate being fitted with cannulas (7) that can be assigned to the individual sample or reaction vessels (5), the feed system comprising a system (9) for introducing gaseous or liquid media, and **in that** the adapter plate (6) is rigidly joined to the rotor or shaking platform (3) in its direction of motion so that the cannulas (7) can remain introduced into the sample vessels (5) while the rotor or shaking platform (3) is in motion.

2. Feed system according to Claim 1, **characterized in that** a vacuum pump (11) is connected to the centrifuge or reaction chamber (1) for maintaining a vacuum while gaseous medium is being fed into the centrifuge or reaction chamber.

3. Feed system according to Claim 1 or Claim 2, **characterized in that** the introduction system (9) is provided with a heating device (12).

4. Feed system according to Claim 1 or Claim 2, **characterized in that** the introduction system (9) is provided with a heat exchanger (12) and a flexible transfer line (13) arranged outside the reaction chamber (1).

5. Use of a feed system according to one of Claims 1 - 4 in evaporators or in reaction chambers for chemical synthesis.

## Revendications

1. Centrifugeuse à vide avec un rotor ou chambre de réaction avec une plaque vibrante (3) intégrée, où dans la centrifugeuse à vide respectivement la chambre de réaction se trouve de manière mobile un nombre de récipients d'échantillons resp. de réaction pour le traitement simultané des échantillons s'y trouvant, avec un système d'amenage pour des milieux gazeux ou liquides vers l'intérieur des récipients d'échantillons resp. de réaction, **caractérisée en ce que** le système d'amenage comprend une plaque adaptatrice (6) réglable en hauteur qui peut être disposée au-dessus des récipients d'échantillons resp. de réaction (5) à l'intérieur de la centrifugeuse resp. de la chambre de réaction, sur laquelle sont disposés des tubes d'injection (7) assignables aux différents récipients d'échantillons resp. de réaction (5), où le système d'amenage comprend un système d'alimentation (9) pour des milieux gazeux ou liquides, **caractérisée en ce que** la plaque adaptatrice (6) est reliée de façon rigide avec le rotor resp. la plaque vibrante (3) dans sa direction de mouvement, de manière à ce que les tubes d'injection (7) peuvent être introduits dans les récipients d'échantillons (5) pendant le mouvement du rotor resp. de la plaque vibrante (3).

2. Système d'amenage selon la revendication 1, **caractérisé en ce qu'**une pompe à vide (11) est raccordée à la centrifugeuse resp. la chambre de réaction (1) qui maintient un vide dans la centrifugeuse resp. la chambre de réaction pendant l'alimentation de milieu gazeux.

3. Système d'amenage selon l'une quelconque des revendications 1-2, **caractérisé en ce que** le système d'alimentation (9) est muni d'un dispositif de chauffage (12).

4. Système d'amenage selon l'une quelconque des revendications 1-2, **caractérisé en ce que** le système d'alimentation (9) est muni d'un échangeur de chaleur (12) et d'une conduite de transfert flexible (13) situés à l'extérieur de la chambre de réaction (1).

5. Utilisation d'un système d'amenage selon l'une quelconque des revendications 1-4 dans des évaporateurs ou des chambres de réaction pour la synthèse chimique.
